(19) Europäisches Patentamt
European Patent Office
Office européen des brevets

(11) EP 1 479 440 A2

(12) EUROPEAN PATENT APPLICATION

(43) Date of publication:
**24.11.2004 Bulletin 2004/48**

(51) Int Cl.[7]: **B01J 41/04**

(21) Application number: **04252620.2**

(22) Date of filing: **05.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **19.05.2003 US 471703 P**

(71) Applicant: **Rohm and Haas**
**Philadelphia, Pennsylvania 19106-2399 (US)**

(72) Inventors:
- **Barrett, James Henry**
  **Pennsylvania 19053 (US)**
- **Lundquist, Eric Gustave**
  **Pennsylvania 19454 (US)**
- **Miers, Jay Alfred**
  **Pennsylvania 19047 (US)**
- **PAFFORD, Margaret Mary**
  **PENNSYLVANIA 19053 (US)**

(74) Representative: **Kent, Venetia Katherine et al**
**Rohm and Haas (UK) Ltd**
**European Patent Department**
**28th. Floor, City Point**
**One Ropemaker Street**
**London EC2Y 9HS (GB)**

(54) **High Selectivity perchlorate Removal Resins and methods and systems using same**

(57) The present invention relates to a resin for removal of perchlorate, methods for manufacturing the resin, and methods and systems using the resin. The resin has a high selectivity coefficient. Given the performance properties of the resin, an economical method of servicing a water treatment system is also provided. The method includes loading into and/or unloading from the water treatment system a perchlorate removal resin having the high selectivity coefficient. In one aspect, the perchlorate removal resin has quaternary alkylamine functionality. In another variant, the resin is capable of removing at least two times the amount of perchlorate per cubic meter of the resin than a conventional perchlorate removal resin. This provides substantial commercial benefits to users.

EP 1 479 440 A2

## Description

This invention relates to resins having high selectivity for perchlorate that are used in the removal of perchlorate and other remediation activities. The invention also relates to systems and methods utilizing the resins to remove perchlorate, and also methods for manufacturing perchlorate removal resins having high selectivity.

Recent studies have indicated the presence of perchlorate in drinking water wells throughout the Western United States. Perchlorate contamination of ground and surface waters originates from the manufacture and destruction of ammonium perchlorate; a strong oxidant used in the aerospace, munitions, and fireworks industries. Practical and efficient methods to treat water contaminated by these pollutants are needed to insure a safe drinking water supply in many communities.

Ammonium perchlorate has been widely used by the aerospace, munitions, and fireworks industries, resulting in widespread soil and water contamination. The Cold War left the U.S. Department of Defense ("DOD") with approximately 140 million pounds of ammonium perchlorate to be disposed of between 1993 and 2005. A similar problem is faced by Cold War rivals, and other countries involved in aerospace, munitions and fireworks industries.

Perchlorate contamination in drinking water wells in the United States was detected in recent years in northern California. These findings prompted further investigation, and perchlorate was detected in southern California wells, the Colorado River, Las Vegas wells, and Lake Mead. Although Federal drinking water standards do not regulate perchlorate, it has been placed on the Drinking Water Contaminant Candidate List issued by the EPA. In particular, there is significant concern over the human health effects of perchlorate due to its known interference with the thyroid gland's ability to utilize iodine and produce thyroid hormones. As a result of these findings, the California Department of Health Services ("CDHS") adopted an action level for perchlorate in drinking water of 18 ppb. Furthermore, the EPA has established a provisional reference dose ("RFD") of 14 mg of perchlorate per kg of body weight per day. The observable effects of perchlorate exposure include blocking of iodine uptake and discharge by the thyroid, gastrointestinal irritation and skin rash, and hematological effects including agranulocytosis and lymphadenopathy. As a result, CDHS is requiring drinking water utilities to monitor and report perchlorate levels to the CDHS.

Perchlorate contamination has been detected in eastern Sacramento County at Aerojet General Corporation's facility. Due to the presence of volatile organic chemicals ("VOCs"), contaminated groundwater at the Aerojet General site was treated and then reinjected into aquifers in the area. Monitoring of the re-injected water indicated that it contained very high levels of perchlorate.

In addition to California, perchlorate has been identified as a contaminant in the water supply of at least 19 other states. The widespread occurrence of perchlorates in ground and surface water combined with its effects on the human body and the concern expressed by California's DHS and the U.S. EPA clearly demonstrate the need for new more efficient technologies to eliminate these inorganic contaminants from drinking water. Numerous technologies have been investigated for the destruction of perchlorate, but none of these provide an economical process for treating drinking water to reduce these contaminants to levels below regulatory limits or the needed high selectivity for these contaminants. Assurance of safe drinking water supplies in the future will require the development of technology which can eliminate these inorganic contaminants from drinking water.

Various attempts to solve problems in the art include: US Patent No. 6,059,975. One of the problems in the art is that conventional perchlorate removal resins have low selectivity coefficients. This means that they are capable of loading only a few kilograms of perchlorate per cubic meter of perchlorate removal resins. Incinerators generally charge by the pound or kilogram for contaminated resin destruction. Consequently, these conventional resins have high destruction (incineration) and disposal costs since large volumes or weights of loaded resin need to be destroyed or otherwise disposed of in relation to the pounds or kilograms of perchlorate loaded onto the total resin.

Another significant problem in the art relates to the loading and unloading of water treatment systems having perchlorate removal functionality. Resins in the art have very low perchlorate selectivity (low selectivity coefficients). Resultingly, the perchlorate removal beds need to be replaced at frequent intervals - this results in high trucking costs, high loading costs, high unloading costs, high bed cleaning costs, increased manpower costs, and increased down time for the water treatment system. Moreover, perchlorate removal resins having low selectivity coefficients are environmentally unfriendly since upon incineration larger quantities of total material are incinerated.

Another problem in the art is the formation of Nitroso-dimethyl amine (NDMA). Various government agencies are looking to severely restrict the formation of NDMA in the remediation process to a limit of 15 PPT. This would make the use of conventional type 1 strong base anionic (TMA based) resins in various jurisdictions undesirable where they too form NDMA as a degradation product. There is a need in the art for a resin that substantially reduces or eliminates NDMA as a degradation product.

The invention teaches solutions to these and other problems facing the art of perchlorate removal in perchlorate removing water treatment systems. The resins described herein are more selective by one or more orders of magnitude than competitive resins currently on the market for the removal of perchlorate from perchlorate containing sources. Resultingly, the resins described herein have high selectivity coefficients versus conventional resins, and

provide significant commercial and technical advantages over conventional resins. Resins that have higher selectivity coefficients: (1) load more kilograms of perchlorate per cubic meter of perchlorate removal resin: (2) have significantly lower destruction (pyrolizing) costs since smaller volumes or weights of loaded resin need to be destroyed versus resins with lower selectivity coefficients; (3) the perchlorate removal beds need to be periodically replaced at less frequent intervals than perchlorate removal resins with lower selectivity coefficients - this results in significantly decreased trucking costs, decreased loading costs, decreased unloading costs, decreased cleaning costs, decreased manpower costs, and decreased down time for the water treatment system; (4) perchlorate removal resins having high selectivity coefficients are environmentally friendly since upon incineration smaller quantities of total material (entire resin volume) are incinerated versus perchlorate removal resins having lower selectivity coefficients; and, (5) perchlorate removal resins having high selectivity coefficients are environmentally friendly since upon land fill disposal these resins are less likely to leach perchlorate back into the ground and ground water sources. The results relating to the selectivity and performance of the resins described herein were unexpected.

While the examples herein generally relate to perchlorate removal, the present invention is generally directed to a novel method for substantially reducing other anionic contaminants from ground water in addition to perchlorate. In particular, the methods, systems and removal resins herein are also suitable for removal of other anionic contaminants, e.g., arsenates, arsenites, nitrates, and chromates from a fluid or other water sources.

The present invention provides both a method of making and a water treatment system incorporating the method for making water potable. Both the method and the use of the method in the system described herein can be used in other applications such as remediation. The method includes loading a perchlorate removal resin having a selectivity coefficient of at least 300,000 based on a 2.0 equivalent % loading of $ClO_4^-$ in a 400 ppm $SO_4^{2-}$ background into a water treatment system having perchlorate and/or nitrate removal functionality. It is appreciated that the selectivity coefficient of the perchlorate removal resin can be modulated as desired by the techniques described herein. Using these techniques resins have been made and are used in the method and system described herein that have selectivities in the range of about 300,000 to over 50,000,000. In variants of the invention, the perchlorate removal resins have been made having unexpectedly high selectivity coefficients. These perchlorate removal resins provide performance characteristics including high perchlorate removal and loading abilities versus conventional resins. By way of example, selectivity coefficients greater than 500,000, greater than 1,000,000, greater than 1,500,000, and greater than (X times 100,000) where X is an integer greater than or equal to three (3)) have been achieved or are readily achieveable for the perchlorate removal resins of the present invention. See, e.g. Table 1 and the discussion contained herein.

The method further includes selectively removing the perchlorate and/or nitrate from a water source with the perchlorate removal resin and/or a nitrate removal resin. The contaminated fluids from the water source are generally run through a treatment system. Various treatment systems are used in the present invention and include a remediation treatment system, a point of use water treatment system, a tap water treatment system, a municipal water treatment system, a water treatment system for the creation of irrigation water, a point of entry water treatment system, a regenerable water treatment system, a disposable water treatment system, a disposable cartridge type water treatment system, and a column type water treatment system. Water sources include but are not limited to contaminated ground water, contaminated lake water, contaminated fluids in other vessels.

The method also includes the step of destroying and/or optionally disposing of the perchlorate removal resin. After the resin is loaded with a predetermined level of perchlorate or at periodic time intervals, e.g. once every 3 months, once every year, once every two years, or at some other empirically determined time interval, the perchlorate removal resin is removed (or repetitively removed) from the water treatment system and generally trucked to an incinerator where it is destroyed. Other options include disposing of the perchlorate removal resin at a storage site and/or a land fill. One of the performance characteristics of variants of the invention include the ability of the resin to tightly bind to the contaminant at issue so that it does not readily leach off the resin. This makes the resin described herein an excellent candidate for land fill disposal. Moreover, since the selectivity of the resin is very high there is more perchlorate per cubic meter of loaded resin than for conventional loaded resins. This means that smaller volumes of perchlorate loaded resins need to be destroyed or disposed of than for conventional resins. Greater volumes of effluent can be passed through a water treatment system prior to replacement of the resin versus conventional resins. Fewer periodic refills of the beds or columns are made, thus reducing costs overall.

A variant of the invention includes loading a nitrate removal resin into the water treatment system, selectively removing the nitrate using the nitrate removal resin from the water source, and repetitively regenerating the nitrate removal resin, and disposeably using the perchlorate removal resin. It is appreciated that in this variant of the invention, the concentration of nitrates is generally several orders of magnitude greater than the concentration of percholorate in the water or fluid source. Consequently, the nitrate will load on one or more types of resins and require resin regeneration after several more cycles than the perchlorate which is customarily disposed of as described. In another variant, the destroying occurs after several cycles of regeneration of the nitrate removal resin, and/or the destroying occurs when the perchlorate reaches a threshold level on the perchlorate removal resin. Optionally, the method can include

measuring a perchlorate concentration prior to the destroying and/or disposing either resin.

Also described herein is a novel method for measuring perchlorate. The method includes creating a sulfate background prior to selective removal of the perchlorate. In this variant, the step of selectively removing further comprises removing nitrate from the water source prior to removing perchlorate from the water source. As described herein, removing the perchlorate from the water source is accomplished using an anion exchange resin. To achieve performance characteristics, the anion exchange resin is functionalized with an amine. By way of example, the amine is a tributyl amine (TBA).

In another variant, the step of selectively removing further comprises running two polishing columns or beds in series. A first polishing column removes nitrate, and a second polishing column removes perchlorate and is operably connected to the first polishing column such that treated water moves from the first to the second column for subsequent treatment. It is appreciated that one or more columns or beds can be arranged in series or parallel to achieve the desired degree of polishing. In yet another variant, the method includes unloading the perchlorate removal resin and/or the nitrate removal resin from the water treatment system.

Yet another aspect of the invention relates to a resin capable of perchlorate removal having a selectivity for removing a higher number of pounds or kilograms of perchlorate per cubic meter of the resin than conventional resins. One example of a resin that can be used herein includes a styrenic resin. Various examples of how this resin is created is provided in the examples described herein. The higher the selectivity coefficient of the resin, the higher the amount of perchlorate that will be removed per cubic meter of perchlorate removal resin. Providing the resin with higher quaternary alkylamine functionality (where the alkyl is $-(CH_2)_xCH_3$, $x \geq 1$) is desirable and will improve the selectivity coefficient of the resin. Exemplary, alkylamine functionality includes triethyl amine functionality, tripropyl amine functionality, tributyl amine functionality, tripentyl amine functionality, and trihexyl amine functionality. In certain variants of the invention, alkylamine functionality is provided to the exclusion of other functionality that decreases the selectivity coefficient of the perchlorate removal resin. In one variant of the invention, the resin having alkylamine functionality is free of or substantially free of functionality that decreases the selectivity coefficient of the resin. In another variant of the invention, mixed amines can also be utilized and the resin functionalized with two different alkyamines. In yet another example, a mixed amine includes an amine, NRR'R", where, for example, R, R', R" include methyl, ethyl, propyl, butyl, pentyl, and/or hexyl substituents and where R, R', and R" can have the same or different alkyl substituents.

The selectivity is also improved using different amine-based strong base resins of chloromethylated gel ion exchange copolymers in one variant of the invention. Amines that are used include trimethyl amine (used as a control), triethyl amine, tripropyl amine, tributyl amine, tripentyl amine and so forth, e.g. $N((CH_2)_xCH_3)_3$, $x \geq 0$. It is contemplated that branched amines also provide the desired performance and functionality in yet another variant of the invention.

One can improve functionalization by balancing the cross-linking density of the copolymers chosen and also by controlling the secondary crosslinking in the chloromethylated intermediate in further variants of the invention. Porosity can often decrease the solids of resins offering cost advantages. Other advantages of porosity include resin strength thus removing resin fines as an issue, reduction in the excess of functionalizing agents required and the ability to better clean the resins in various parts of the manufacturing process. Additionally, one can gain access to functionality for the entire copolymer matrix by using macroreticular or macroporous copolymers.

In another variant of the invention, selectivity and/or capacity can be positively modulated through the use of polyamines such as diethylene triamine ($H_2NCH_2CH_2NHCH_2CH_2NH_2$) and higher analogs such as $H_2N(CH_2CH_2NH)_xH_x$ where x can range from 1 to 10, or 3 to 10 or more. The idea is to exhaustively methylate these weak base resins and then to partially or fully quaternize the weak base intermediates. The methylated intermediates are quite hydrophobic and by balancing chain length or degree of branching with degree of quaternization one can optimize perchlorate selectivity and capacity.

Other types of amines that provide hydrophobic resins and higher selectivity when used to functionalize chloromethylated intermediates would be bridged amines such as the following:

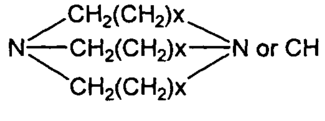

x in this case would be equal to or greater than 1 and could be different for each bridge. Also, the bridges could be branched.

In yet another variant of the invention, we chose to examine acrylic weak base resins although these would be initially more hydrophilic than styrenic resins due to their polarity and swellability. For example IRA458 resin (commercially available from Rohm and Haas Company) can be made to perform well by preparing higher crosslinked copolymers and then functionalizing them with, for example, polyamines such as those described above followed by

reductive methylation and quaternization in order to add more hydrophobicity.

In some variants of the invention, it may be desireable to separate secondary crosslinking from primary crosslinking effects. To do this one can prepare resins based upon chloromethylated monomers such as vinyl benzyl chloride (VBC). One can prepare either gelular or macroreticular VBC copolymers crosslinked with DVB or other crosslinkers such as those outlined in Meitzner & Oline series of patents, e.g. U.S. Patent Nos. 4,224,415, 4,221,871, 4,501,826, 4,297,220, 4,256,840 and 4,486,313. For one type of resin, one would aim to use the more hydrophobic type of crosslinkers although at higher crosslinking levels somewhat more hydrophilic crosslinkers could be tolerated. These copolymers are then functionalized with various amines as described above for chloromethylated intermediates prepared with chloromethylether (CME) and a Friedel-Crafts catalyst. These resins are particularly valuable in separating out the effects of secondary crosslinking on resin performance.

In another variant, a route to perchlorate selective resins is to prepare aminomethylated intermediates having the following structure:

$$Ar(xl)\text{-}CH_2NH_2 \text{ or } Ar(xl)\text{-}CH_2NHR$$

These aminomethylated intermediates are exhaustively alkylated to yield trialkyl quaternary resins ($Ar(xl)\text{-}CH_2NR_3^+X^-$) somewhat similar in structure to resins based upon VBC described above. The variants of resins can be prepared by methods known in the literature and R represents a range of alkyl groups.

Still another type of strong base resin variants are represented by the vinyl pyridines (VP). Both gelular and macroreticular VP resins having the nitrogen in the ortho, meta or para position are known in the literature, and can be used in the present invention. By varying the chain length of the quaternizing agent one establishs a range of hydrophobic sites. In this case, alkylating agents such as, by way of example - $C_4H_9X$ (where X is a halogen or another leaving group), provide optimally performing resins with macroreticular or "porous" resins in this variant of the invention.

One can also achieve higher levels of functionalization by using lower crosslinking, using swelling solvents, using higher reaction temperatures or longer reaction times. Additionally, one can prepare resins in the presence of a swelling agent for the copolymer and thus achieve higher degrees of functionalization with bulky amines. These methods yield resins having a higher selectivity for the perchlorate ion in other variants of the invention.

In yet another variant of the invention, by preparing resins which have a limited swellability in water and a greater swellability in a solvent for the matrix one is able to develop a perchlorate or other ion selective resin that would lose various portions of selectivity in the swollen state and thus be more regenerable. This would allow for the preparation of an improved regenerable resin.

**Comparative Example**

The amount of perchlorate removed per cubic meter of resin used herein is calculated using the following methodology: The calculation for the loading values given below are valid for a $SO_4^{2-}$ background solution of 400 ppm and an equilibrium perchlorate concentration of 15 ppb.

The loading for Purolite™ A530 resin, which is described as a bifunctional alkylamine resin in the literature, under these conditions is calculated to be: 0.8 $kg/m^3$ (0.05 $lb/ft^3$). The loading for the material obtained in Example 4 is calculated to be: 3.7 $kg/m^3$ (0.23 $lb/ft^3$). The loading for the material obtained in Example 13 is calculated to be 4.8 $kg/m^3$ (0.30 $lb/ft^3$).

It is appreciated that the resins described herein are capable of removing at least two times more perchlorate per cubic meter than the conventional resins (Purolite™ A530 resin, and Dowex™ 1 resin tested as of May, 2003). Moreover, in the comparative example the resin made by the processes described herein was capable of loading and removing over four times the perchlorate than the conventional resin (Purolite™ A530 resin).

The calculations are done as follows: given a known selectivity coefficient K, the equilibrium concentration of $ClO_4$, and the sulfate background concentration, use the formula provided in Example 15 to calculate R- $ClO_4$. From that, R- $ClO_4$ * the volume capacity of the resin = perchlorate loading in eq/L. This is then converted to $kg/m^3$.

In other variants of the invention, the nitrate removal resin is a regenerable anion exchange resin. It is appreciated that the method can also include regenerating the nitrate removal resin, and not regenerating the perchlorate removal resin, and that selectively removing the perchlorate comprises, in a variant, removing the perchlorate through one or more anion exchange resin beds in series. The first bed is used for removing the nitrate to increase the effective selectivity for perchlorate on a second resin bed and to increase the loading mass of perchlorate on the second resin bed. Waste and costs are significantly reduced in this variant of the invention. The nitrate content of water source feed waters can be at least three orders of magnitude greater than the perchlorate concentration of the water source. The volume of waste regenerant to be treated is significantly reduced, and the regenerant volume for just nitrate regeneration is lower since the chloride-perchlorate selectivity for the resin(s) is greater than the chloride-nitrate selectivity.

In yet other aspects, it is appreciated that a method of perchlorate remediation comprising removing the percholorate from a source with the resins described herein is provided.

Various commercially available water treatment systems comprising the resins used herein can be constructed, and serviced. In this regard, another variant of the invention provides for a method of servicing a water treatment system comprising: loading into and/or unloading from the water treatment system a perchlorate removal resin capable of removing larger amounts of perchlorate per cubic meter of the resin versus conventional resins.

Relative to ions more commonly found in groundwater ($HCO_3^-$, $Cl^-$, $NO_3^-$, $SO_4^{2-}$), the perchlorate ion, $ClO_4^-$, has a large size and a low hydration energy (Brown, G.M.; Bonnesen, P.V.; Moyer, B.A.; Baohua, G.; Alexandratos, S. D.; Patel, V.; Ober, R. "The Design of Selective Resins for the Removal of Pertechnate and Perchlorate from Groundwater." In *Perchlorate in the Environment.,* E.T. Urbansky, Ed. Kluwer/Plenum: New York, NY, 2000, Ch.15.).

While not being bound by theory, it is appreciated that the selectivity for large poorly hydrated anions over smaller more hydrated anions generally increases as the size of the alkyl chain of the amine associated with the quaternary ammonium exchange site increases. The data which has been obtained (see Table 1 below) show that this is indeed the case. From an electrostatic standpoint, there has been created an ideal environment for the perchlorate anion by optimizing the size and distribution of the quaternary ammonium groups on the resin in order to minimize the polarity at the ion exchange site. Such an environment favors the anion exchange of the perchlorate ion from the aqueous to a non-aqueous phase.

In one variant of the invention, the resin of interest is functionalized with a higher n-alkylamine (where the alkyl is $-(CH_2)_xCH_3$, $x \geq 1$) to obtain high selectivity for perchlorate. In another variant of the invention, selectivity can be modulated by partial functionalization of a chloromethylated intermediate resin. In a third variant, selectivity for anionic contaminants such as perchlorate can be controlled by varying not only the amount of DVB content in the copolymer matrix but also by varying the degree of secondary crosslinking obtained during and/or after the haloalkylation process.

In another variant, the invention provides a method of manufacture for the perchlorate removal resins described herein. The method is used to prepare anion exchange resins having a high selectivity for the removal of perchlorate and other contaminants. The method includes chloromethylating a poly(vinylaromatic) copolymer in the presence of sulfuric acid such as described in US Patent Publication 20030018091A1 (incorporated herein by reference as if fully set forth); quenching the chloromethylated intermediate (CMI) by a non-agitated plug-flow downward addition of a quench solution to the mixture of the chloromethylated intermediate and sulfuric acid; washing the CMI to remove the sulfuric acid; neutralizing the washed intermediate with an aqueous NaOH solution to a pH of 8 - 10; functionalizing the chloromethylated intermediate with an aminating agent; and washing the functionalized ion exchange resin free of solvent and amine.

The aminating agent for the perchlorate removal resin can be trimethyl, triethyl, tripropyl, tributyl, tripentyl, or trihexyl amine. Amination of the chloromethylated intermediate includes suspending the chloromethylated intermediate in a solvent system containing 2 - 100 parts alcohol or a non-swelling solvent which has some water solubility and in which the amine of choice is completely soluble (alcohols include but are not limited to methanol, ethanol, n-propanol, iso-propanol, n-butanol, iso-butanol), 0 - 98 parts water for higher alkyl amines (greater then triethyl), and optionally a swelling solvent; contacting the suspended CMI for a period of time (typically 5 - 48 hours) at elevated temperatures (35 - 90 °C) with a sufficient quantity of aminating agent to achieve the desired degree of functionalization. Optionally, the amine and/or solvent may be recovered and/or recycled to a subsequent batch.

Washing the functionalized ion exchange resin involves isolating the resin from the reaction medium and contacting the resin with a solvent in which the amine is soluble such as water or an alcohol; in a second step contacting the resin with an aqueous solution of HCl; and in a third step washing the resin with water in order to remove any residual HCl and/or solvent.

**Example 1**

About 106 g of a low solids gelular styrene-divinylbenzene copolymer (p(St-DVB)) was haloalkylated as follows: 244 g of chlorosulfonic acid (CSA) was added over a 4 hour reaction period to a reaction vessel containing the p(St-DVB), 136 g of an aqueous formaldehyde solution (55% formaldehyde, 35% methanol), 40 g of aqueous HCl (35%), 32 g of methanol, and approximately 15 g of aqueous ferric chloride (40%) solution. The temperature of the reaction mixture during CSA addition was maintained at 40 °C and below. After completion of CSA addition, the reaction mixture was held at 38 - 40 °C for a period of 2.5 hours with agitation. The reaction mixture was cooled to 25 - 30 °C and a quench solution (330 g of water) was added to the chloromethylated intermediate. The mother liquor was removed from the solid product, and the chloromethylated intermediate was washed with additional water.

The washed chloromethylated intermediate was slurried with 200 - 400 g of water and neutralized with 50% aqueous NaOH to a pH of 8 - 10. After neutralization, the chloromethylated beads are isolated and slurried with 200 g of *iso*-butanol and 200 g of water. The mixture was agitated for approximately 15 minutes. Subsequently, 148 g of

tributylamine was added, and the reaction mixture was heated to 85 °C over 3 hours, and held at 85 °C for an additional 16 hours. The resultant anion exchange beads are drained free of residual liquid. The resin was then washed with 400 mL of ethanol, followed by washing with 2 x 400 mL of 0.2 N HCl, and finally, rinsing with water until neutralized.

**Example 2**

About 106 g of a low solids gelular styrene-divinylbenzene copolymer (p(St-DVB)) was haloalkylated as follows: 244 g of chlorosulfonic acid (CSA) was added over a 4 hour reaction period to a reaction vessel containing the p(St-DVB), 136 g of an aqueous formaldehyde solution (55% formaldehyde, 35% methanol), 40 g of aqueous HCl (35%), 32 g of methanol, and approximately 15 g of aqueous ferric chloride (40%) solution. The temperature of the reaction mixture during CSA addition was maintained at 40 °C and below. After completion of CSA addition, the reaction mixture was held at 38 - 40 °C for a period of 2.5 hours with agitation. The reaction mixture was cooled to 25 - 30 °C and a quench solution (330 g of water) was added to the chloromethylated intermediate. The mother liquor was removed from the solid product, and the chloromethylated intermediate was washed with additional water.

The washed chloromethylated intermediate was slurried with 200 - 400 g of water and neutralized with 50% aqueous NaOH to a pH of 8 - 10. After neutralization, the chloromethylated beads are isolated and slurried with 200 g of *iso*-butanol and 200 g of water. The mixture was agitated for approximately 15 minutes. Subsequently, 93 g of tributylamine was added, and the reaction mixture was heated to 85 °C over 3 hours, and held at 85 °C for an additional 16 hours. The resultant anion exchange beads are drained free of residual liquid. The resin was then washed with 400 mL of ethanol, followed by washing with 2 x 400 mL of 0.2 N HCl, and finally, rinsing with water until neutralized.

**Example 3**

About 106 g of a low solids gelular styrene-divinylbenzene copolymer (p(St-DVB)) was haloalkylated as follows: 244 g of chlorosulfonic acid (CSA) was added over a 4 hour reaction period to a reaction vessel containing the p(St-DVB), 136 g of an aqueous formaldehyde solution (55% formaldehyde, 35% methanol), 40 g of aqueous HCl (35%), 32 g of methanol, and approximately 15 g of aqueous ferric chloride (40%) solution. The temperature of the reaction mixture during CSA addition was maintained at 40 °C and below. After completion of CSA addition, the reaction mixture was held at 38 - 40 °C for a period of 2.5 hours with agitation. The reaction mixture was cooled to 25 - 30 °C and a quench solution (330 g of water) was added to the chloromethylated intermediate. The mother liquor was removed from the solid product, and the chloromethylated intermediate was washed with additional water.

The washed chloromethylated intermediate was slurried with 200 - 400 g of water and neutralized with 50% aqueous NaOH to a pH of 8 - 10. After neutralization, the chloromethylated beads are isolated and slurried with 67 g of *iso*-butanol and 333 g of water. The mixture was agitated for approximately 15 minutes. Subsequently, 148 g of tributylamine was added, and the reaction mixture was heated to 85 °C over 3 hours, and held at 85 °C for an additional 16 hours. The resultant anion exchange beads are drained free of residual liquid. The resin was then washed with 400 mL of ethanol, followed by washing with 2 x 400 mL of 0.2 N HCl, and finally, rinsing with water until neutralized.

**Example 4**

About 106 g of a low solids gelular styrene-divinylbenzene copolymer (p(St-DVB)) was haloalkylated as follows: 244 g of chlorosulfonic acid (CSA) was added over a 4 hour reaction period to a reaction vessel containing the p(St-DVB), 136 g of an aqueous formaldehyde solution (55% formaldehyde, 35% methanol), 40 g of aqueous HCl (35%), 32 g of methanol, and approximately 15 g of aqueous ferric chloride (40%) solution. The temperature of the reaction mixture during CSA addition was maintained at 40 °C and below. After completion of CSA addition, the reaction mixture was held at 38 - 40 °C for a period of 2.5 hours with agitation. The reaction mixture was cooled to 25 - 30 °C and a quench solution (330 g of water) was added to the chloromethylated intermediate. The mother liquor was removed from the solid product, and the chloromethylated intermediate was washed with additional water.

The washed chloromethylated intermediate was slurried with 400 g of water and neutralized with 50% aqueous NaOH to a pH of 8 - 10. After neutralization, the chloromethylated beads are isolated and slurried with 400 g of ethanol and 400 g of water. The mixture was agitated for approximately 15 minutes. Subsequently, 556 g of tributylamine was added, and the reaction mixture is heated to 70 °C over 1 hour, and held at 70 °C for an additional 48 hours. The resultant anion exchange beads was drained free of residual liquid. The resin was then washed with 400 mL of ethanol, followed by washing with 2 x 400 mL of 0.2 N HCl, and finally, rinsing with water until neutralized.

**Example 5**

About 106 g of a low solids gelular styrene-divinylbenzene copolymer (p(St-DVB)) was haloalkylated as follows: 244 g of chlorosulfonic acid (CSA) was added over a 4 hour reaction period to a reaction vessel containing the p(St-DVB), 136 g of an aqueous formaldehyde solution (55% formaldehyde, 35% methanol), 40 g of aqueous HCl (35%), 32 g of methanol, and approximately 15 g of aqueous ferric chloride (40%) solution. The temperature of the reaction mixture during CSA addition is maintained at 40 °C and below. After completion of CSA addition, the reaction mixture is held at 38 - 40 °C for a period of 2.5 hours with agitation. The reaction mixture is cooled to 25 - 30 °C and a quench solution (330 g of water) is added to the chloromethylated intermediate. The mother liquor is removed from the solid product, and the chloromethylated intermediate is washed with additional water.

The washed chloromethylated intermediate is slurried with 200 - 400 g of water and neutralized with 50% aqueous NaOH to a pH of 8 - 10. After neutralization, the chloromethylated beads are isolated and slurried with 200 g of *iso*-butanol. The mixture is agitated for approximately 15 minutes. Subsequently, 148 g of tributylamine is added, and the reaction mixture is heated to 85 °C over 3 hours, and held at 85 °C for an additional 16 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 6**

About 106 g of a low solids gelular styrene-divinylbenzene copolymer (p(St-DVB)) was haloalkylated as follows: 244 g of chlorosulfonic acid (CSA) was added over a 4 hour reaction period to a reaction vessel containing the p(St-DVB), 136 g of an aqueous formaldehyde solution (55% formaldehyde, 35% methanol), 40 g of aqueous HCl (35%), 32 g of methanol, and approximately 15 g of aqueous ferric chloride (40%) solution. The temperature of the reaction mixture during CSA addition is maintained at 40 °C and below. After completion of CSA addition, the reaction mixture is held at 38 - 40 °C for a period of 2.5 hours with agitation. The reaction mixture is cooled to 25 - 30 °C and a quench solution (330 g of water) is added to the chloromethylated intermediate. The mother liquor is removed from the solid product, and the chloromethylated intermediate is washed with additional water.

The washed chloromethylated intermediate is slurried with 200 - 400 g of water and neutralized with 50% aqueous NaOH to a pH of 8 - 10. After neutralization, the chloromethylated beads are isolated and slurried with 400 g of *iso*-butanol and 400 g of water. The mixture is agitated for approximately 15 minutes. Subsequently, 39 g of tributylamine is added, and the reaction mixture is heated to 70 °C over 1 hour, and held at 70 °C for an additional 6 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 7**

About 106 g of a low solids gelular styrene-divinylbenzene copolymer (p(St-DVB)) was haloalkylated as follows: 244 g of chlorosulfonic acid (CSA) was added over a 4 hour reaction period to a reaction vessel containing the p(St-DVB), 136 g of an aqueous formaldehyde solution (55% formaldehyde, 35% methanol), 40 g of aqueous HCl (35%), 32 g of methanol, and approximately 15 g of aqueous ferric chloride (40%) solution. The temperature of the reaction mixture during CSA addition is maintained at 40 °C and below. After completion of CSA addition, the reaction mixture is held at 38 - 40 °C for a period of 2.5 hours with agitation. The reaction mixture is cooled to 25 - 30 °C and a quench solution (330 g of water) is added to the chloromethylated intermediate. The mother liquor is removed from the solid product, and the chloromethylated intermediate is washed with additional water.

The washed chloromethylated intermediate is slurried with 200 - 400 g of water and neutralized with 50% aqueous NaOH to a pH of 8 - 10. After neutralization, the chloromethylated beads are isolated and slurried with 400 g of *n*-propanol and 400 g of water. The mixture is agitated for approximately 15 minutes. Subsequently, 75 g of tripropylamine is added, and the reaction mixture is heated to 80 °C over 1 hour, and held at 80 °C for an additional 6 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 8**

About 106 g of a low solids gelular styrene-divinylbenzene copolymer (p(St-DVB)) was haloalkylated as follows: 351 g of chlorosulfonic acid (CSA) was added over a 4 hour reaction period to a reaction vessel containing the p(St-DVB), 203 g of an aqueous formaldehyde solution (55% formaldehyde, 35% methanol), 49 g of aqueous HCl (35%), 48 g of methanol, and approximately 26 g of aqueous ferric chloride (40%) solution. The temperature of the reaction mixture during CSA addition is maintained at 40 °C and below. After completion of CSA addition, the reaction mixture is held at 38 - 40 °C for a period of 2 hours with agitation. The reaction mixture is cooled to 25 - 30 °C and a quench solution (330 g of water) is added to the chloromethylated intermediate. The mother liquor is removed from the solid product, and the chloromethylated intermediate is washed with additional water.

The washed chloromethylated intermediate is slurried with 200 - 400 g of water and neutralized with 50% aqueous NaOH to a pH of 8 - 10. After neutralization, the chloromethylated beads are isolated and slurried with 250 g of methylal and 375 g of water. The mixture is agitated for approximately 15 minutes. Subsequently, 389 g of tributylamine is added, and the reaction mixture is heated to 50 °C over 1 hour, and held at 50 °C for an additional 20 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 9**

About 106 g of a low solids gelular styrene-divinylbenzene copolymer (p(St-DVB)) was haloalkylated as follows: 351 g of chlorosulfonic acid (CSA) was added over a 4 hour reaction period to a reaction vessel containing the p(St-DVB), 203 g of an aqueous formaldehyde solution (55% formaldehyde, 35% methanol), 49 g of aqueous HCl (35%), 48 g of methanol, and approximately 26 g of aqueous ferric chloride (40%) solution. The temperature of the reaction mixture during CSA addition is maintained at 40 °C and below. After completion of CSA addition, the reaction mixture is held at 38 - 40 °C for a period of 2 hours with agitation. The reaction mixture is cooled to 25 - 30 °C and a quench solution (330 g of water) is added to the chloromethylated intermediate. The mother liquor is removed from the solid product, and the chloromethylated intermediate is washed with additional water.

The washed chloromethylated intermediate is slurried with 200 - 400 g of water and neutralized with 50% aqueous NaOH to a pH of 8 - 10. After neutralization, the chloromethylated beads are isolated and slurried with 250 g of methylal and 375 g of water. The mixture is agitated for approximately 15 minutes. Subsequently, 389 g of tributylamine is added, followed by 125 mL of *n*-butanol. The reaction mixture is heated to 50 °C over 1 hour, and held at 50 °C for an additional 20 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 10**

About 106 g of a low solids gelular styrene-divinylbenzene copolymer (p(St-DVB)) was haloalkylated as follows: To a reaction vessel is added 145 g of an aqueous formaldehyde solution (55% formaldehyde, 35% methanol), 82 g of methylal, and 90 g of aqueous HCl (35%). Chlorosulfonic acid (306 g) is added to the vessel over a 3 hour period maintaining a temperature below 40 °C. The styrene-divinylbenzene copolymer (p(St-DVB)) is subsequently charged to the reaction mixture and agitated for 1 hour at a temperature of 39 °C. Approximately 25 g of aqueous ferric chloride (40%) solution is added over 30 minutes. After completion of the $FeCl_3$ addition, the reaction mixture is held at 44 - 46 °C for a period of 4 hours with agitation. The reaction mixture is cooled to 25 - 30 °C and a quench solution (150 g of methanol) is added to the chloromethylated intermediate. The mother liquor is removed from the solid product, and the chloromethylated intermediate is washed with additional methanol.

The washed chloromethylated intermediate is slurried with 200 - 400 g of water and neutralized with 50% aqueous NaOH to a pH of 8 - 10. After neutralization, the chloromethylated beads are isolated and slurried with 250 g of methylal and 375 g of water. The mixture is agitated for approximately 15 minutes. Subsequently, 97 g of tributylamine is added, followed by 125 mL of *n*-butanol. The reaction mixture is heated to 50 °C over 1 hour, and held at 50 °C for an additional 20 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 11**

About 106 g of a low solids gelular styrene-divinylbenzene copolymer (p(St-DVB)) was haloalkylated as follows: To a reaction vessel is added 145 g of an aqueous formaldehyde solution (55% formaldehyde, 35% methanol), 82 g of methylal, and 90 g of aqueous HCl (35%). Chlorosulfonic acid (306 g) is added to the vessel over a 3 hour period maintaining a temperature below 40 °C. The styrene-divinylbenzene copolymer (p(St-DVB)) is subsequently charged to the reaction mixture and agitated for 1 hour at a temperature of 39 °C. Approximately 25 g of aqueous ferric chloride (40%) solution is added over 30 minutes. After completion of the $FeCl_3$ addition, the reaction mixture is held at 44 - 46 °C for a period of 4 hours with agitation. The reaction mixture is cooled to 25 - 30 °C and a quench solution (150 g of methanol) is added to the chloromethylated intermediate. The mother liquor is removed from the solid product, and the chloromethylated intermediate is washed with additional methanol.

The washed chloromethylated intermediate is slurried with 200 - 400 g of water and neutralized with 50% aqueous NaOH to a pH of 8 - 10. After neutralization, the chloromethylated beads are isolated and slurried with 400 g of *iso*-butanol and 400 g of water. The mixture is agitated for approximately 15 minutes. Subsequently, 545 g of

tributylamine is added, and the reaction mixture is heated to 50 °C over 1 hour, and held at 50 °C for an additional 20 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 12**

About 100 g of a high solids macroporous styrene-divinylbenzene copolymer (p(St-DVB)) was haloalkylated as follows: To a reaction vessel is added 140 g of an aqueous formaldehyde solution (55% formaldehyde, 35% methanol), 30 g of methanol, and 52 g of water. An aqueous solution of sulfuric acid (78%, 150 g) is subsequently charged maintaining a temperature below 30 °C. The styrene-divinylbenzene copolymer (p(St-DVB)) is charged to the reaction mixture and agitated for 15 minutes at a temperature of 25 - 30 °C. Approximately 23.5 g of aqueous ferric chloride (40%) solution is added in one shot, and the mixture is agitated for 5 minutes. After completion of the $FeCl_3$ addition, 290 g of chlorosulfonic acid (CSA) is charged over a four hour time period with agitation while maintaining the temperature of the reaction vessel at 39 - 41 °C. Upon completion of the CSA addition, the reaction mixture is heated to 45 °C over 10 minutes and held at 44 - 46 °C for a period of 4 hours with agitation. The reaction mixture is cooled to 25 - 30 °C, and a quench solution (330 g of water) is added to the chloromethylated intermediate. The mother liquor is removed from the solid product, and the chloromethylated intermediate is washed with additional water.

In one variant of the invention, a high solids copolymer can have in the range of 1% to about 5% DVB.

The washed chloromethylated intermediate is slurried with 200 - 400 g of water and neutralized with 50% aqueous NaOH to a pH of 8 - 10. After neutralization, the chloromethylated beads are isolated and slurried with 250 g of methylal and 375 g of water. The mixture is agitated for approximately 15 minutes. Subsequently, 97 g of tributylamine is added, and the reaction mixture is heated to 50 °C over 1 hour, and held at 50 °C for an additional 20 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 13**

About 100 g of a high solids macroporous styrene-divinylbenzene copolymer (p(St-DVB)) was haloalkylated as follows: To a reaction vessel is added 140 g of an aqueous formaldehyde solution (55% formaldehyde, 35% methanol), 30 g of methanol, and 52 g of water. An aqueous solution of sulfuric acid (78%, 150 g) is subsequently charged maintaining a temperature below 30 °C. The styrene-divinylbenzene copolymer (p(St-DVB)) is charged to the reaction mixture and agitated for 15 minutes at a temperature of 25 - 30 °C. Approximately 23.5 g of aqueous ferric chloride (40%) solution is added in one shot, and the mixture is agitated for 5 minutes. After completion of the $FeCl_3$ addition, 290 g of chlorosulfonic acid (CSA) is charged over a four hour time period with agitation while maintaining the temperature of the reaction vessel at 39 - 41 °C. Upon completion of the CSA addition, the reaction mixture is heated to 45 °C over 10 minutes and held at 44 - 46 °C for a period of 4 hours with agitation. The reaction mixture is cooled to 25 - 30 °C, and a quench solution (330 g of water) is added to the chloromethylated intermediate. The mother liquor is removed from the solid product, and the chloromethylated intermediate is washed with additional water.

The washed chloromethylated intermediate is slurried with 200 - 400 g of water and neutralized with 50% aqueous NaOH to a pH of 8 - 10. After neutralization, the chloromethylated beads are isolated and slurried with 200 g of *iso*-butanol and 200 g of water. The mixture is agitated for approximately 15 minutes. Subsequently, 148 g of tributylamine is added, and the reaction mixture is heated to 85 °C over 3 hours, and held at 85 °C for an additional 16 hours. The resultant anion exchange beads are drained free of residual liquid. The resin is then washed with 400 mL of ethanol, followed by washing with 2 x 400 mL of 0.2 N HCl, and finally, rinsing with water until neutralized.

**Example 14**

About 100 g of a high solids macroporous styrene-divinylbenzene copolymer (p(St-DVB)) containing 6.0% DVB was haloalkylated as follows: To a reaction vessel is added 140 g of an aqueous formaldehyde solution (55% formaldehyde, 35% methanol), 30 g of methanol, and 52 g of water. An aqueous solution of sulfuric acid (78%, 150 g) is subsequently charged maintaining a temperature below 30 °C. The styrene-divinylbenzene copolymer (p(St-DVB)) is charged to the reaction mixture and agitated for 15 minutes at a temperature of 25 - 30 °C. Approximately 23.5 g of aqueous ferric chloride (40%) solution is added in one shot, and the mixture is agitated for 5 minutes. After completion of the $FeCl_3$ addition, 290 g of chlorosulfonic acid (CSA) is charged over a four hour time period with agitation while maintaining the temperature of the reaction vessel at 39 - 41 °C. Upon completion of the CSA addition, the reaction mixture is heated to 45 °C over 10 minutes and held at 44 - 46 °C for a period of 4 hours with agitation. The reaction mixture is cooled to 25 - 30 °C, and a quench solution (330 g of water) is added to the chloromethylated intermediate. The mother liquor is removed from the solid product, and the chloromethylated intermediate is washed with additional

water.

The washed chloromethylated intermediate is slurried with 200 - 400 g of water and neutralized with 50% aqueous NaOH to a pH of 8 - 10. After neutralization, the chloromethylated beads are isolated and slurried with 200 g of *iso*-butanol and 200 g of water. The mixture is agitated for approximately 15 minutes. Subsequently, 222 g of tributylamine is added, and the reaction mixture is heated to 85 °C over 3 hours, and held at 85 °C for an additional 16 hours. The resultant anion exchange beads are drained free of residual liquid. The resin is then washed with 400 mL of ethanol, followed by washing with 2 x 400 mL of 0.2 N HCl, and finally, rinsing with water until neutralized.

### Example 15

The equilibrium behavior of the sample resins under dilute ion conditions is determined as follows. The resin sample is first Buchner drained to remove excess moisture. 80 g of resin is obtained. From the 80 g sample, a portion of material (*x*) is isolated and converted to the perchlorate form using 150 mL of 0.5 N sodium perchlorate per gram of $SO_4^{2-}$ form resin. The relative amount of that portion (*x*) is the weight of resin necessary to achieve the desired perchlorate loading for the entire 80 g resin sample. The remaining portion of the sample (*80 - x*) is converted to the $SO_4^{2-}$ form using standard procedures, e.g. using sodium sulfate. The perchlorate loaded resin (*x*), and the $SO_4^{2-}$ loaded resin (*80 - x*) are then mixed in a clean plastic bottle with 100 mL of DI water. The resin is agitated on a shaker for approximately 16 hours. Once the sample has reached equilibrium, it is Buchner drained. Approximately 50 mL of resin is then measured and placed in a fritted glass tube. Water is added to 0.5 - 1.0 inch above the resin bed and a 400 ppm background $SO_4^{2-}$ solution is passed through the resin at 30 mL/min. Samples of the effluent are taken every 30 minutes for 1.5 hours. The samples are then analyzed for low levels of perchlorate using ion chromatography/mass spectrometry (IC/MS). This result provides the equilibrium leakage of $ClO_4^-$ at a known loading of perchlorate on the sample resin.

The selectivity constant, $K(ClO_4/SO_4)$, is then calculated in the conventional manner (e.g. as described in Perry and Chilton, *Chemical Engineer's Handbook,* **16**-13 thru **16**-15 (5th Edition, 1973)) using the following expression:

$$2\,ClO_4^- + R_2\text{–}SO_4 \rightleftharpoons 2\,R\text{–}ClO_4 + SO_4^{2-}$$

$$K(ClO_4/SO_4) = \frac{[(\text{R-ClO}_4\text{, eq/kg})/\text{Total Wt Cap}]^2\ [\text{SO}_4\text{, eq/l}]/[\text{Total Ion Conc, eq/l}]}{[(\text{R}_2\text{-SO}_4\text{, eq/kg})/\text{Total Wt Cap}]\ [\text{ClO}_4\text{, eq/l}][\text{Total Ion Conc, eq/l}]^2}$$

where $R_2$-$SO_4$ and R-$ClO_4$ represent the ions associated with the resin, $ClO_4^-$ and $SO_4^{2-}$ represent the ions in aqueous solution, and Wt Cap represents the total anion exchange capacity in units of eq/kg. The information provided in Table 1 contains the equilibrium leakage concentrations of perchlorate ($ClO_4$, eq/l) in a sulfate background solution for various sample resins having a known perchlorate loading (R-$ClO_4$, eq/kg).

### Example 16

The equilibrium behavior is determined as above in Example 14 except that 300 ml of 0.5 N sodium perchlorate per gram of Cl form resin is used to convert a portion of the resin sample (*x*) to the perchlorate form. Also, the background ion solution in this case is 300 ppm $Cl^-$.

The selectivity constant, $K(ClO_4/Cl)$, is then calculated in the conventional manner (e.g. as described in Perry and Chilton, *Chemical Engineer's Handbook,* **16**-13 thru **16**-15) using the following expression:

$$ClO_4^- + R\text{–}Cl \rightleftharpoons R\text{–}ClO_4 + Cl^-$$

$$K(ClO_4/SO_4) = \frac{[(\text{R-ClO}_4\text{, eq/kg})/\text{Total Wt Cap}]\ [\text{Cl, eq/l}]/[\text{Total Ion Conc, eq/l}]}{[(\text{R-Cl, eq/kg})/\text{Total Wt Cap}]\ [\text{ClO}_4\text{, eq/l}]/[\text{Total Ion Conc, eq/l}]}$$

where R-Cl and R-$ClO_4$ represent the ions associated with the resin, $ClO_4^-$ and $Cl^-$ represent the ions in aqueous solution, and Wt Cap represents the total anion exchange capacity in units of eq/kg.

**Example 17**

The equilibrium behavior is determined as above in Example 14 except that 300 ml of 0.5 N sodium perchlorate per gram of Cl form resin is used to convert a portion of the resin sample (*x*) to the perchlorate form. Also, the background ion solution in this case is 300 ppm $NO_3^-$.

The selectivity constant (or coefficient), $K(ClO_4/NO_3)$, is then calculated in the conventional manner (e.g. as described in Perry and Chilton, *Chemical Engineer's Handbook,* **16**-13 thru **16**-15) using the following expression:

$$ClO_4^- + R-NO_3 \rightleftharpoons R-ClO_4 + NO_3^-$$

$$K(ClO_4/SO_4) = \frac{[(R\text{-}ClO_4,\ eq/kg)/Total\ Wt\ Cap]\ [NO_3,\ eq/l]/[Total\ Ion\ Conc,\ eq/l]}{[(R\text{-}NO_3,\ eq/kg)/Total\ Wt\ Cap]\ [ClO_4,\ eq/l]/[Total\ Ion\ Conc,\ eq/l]}$$

where $R\text{-}NO_3$ and $R\text{-}ClO_4$ represent the ions associated with the resin, $ClO_4^-$ and $NO_3^-$ represent the ions in aqueous solution, and Wt Cap represents the total anion exchange capacity in units of eq/kg. By way of example, a 2.0 equivalent percent loading of $ClO_4^-$ in a 400 ppm $SO_4^{2-}$ background is obtained as described in Example 15. By way of further example, one can calculate that a perchlorate removal resin is capable under the same conditions as described above of removing at least two times the amount of perchlorate per cubic meter of resin than a conventional perchlorate removal resin (Purolite A530) as shown in the comparative example herein.

Table 1: Selectivity Constants (Coefficients) for Various Resins Under Dilute Ion Conditions Where Background Ion is $SO_4^{2-}$

| Resin | Copolymer (amine) | Equivalent % R-$ClO_4$ | R-$ClO_4$ (eq/kg) | R-$SO_4$ (eq/kg) | $SO_4^{2-}$ (eq/l) | $ClO_4^-$ (ppb) | Vol Cap (eq/l) | Wgt Cap (eq/kg) | Selectivity ($ClO_4$/$SO_4$) |
|---|---|---|---|---|---|---|---|---|---|
| Dowex 1 | Gel (TMA) | 2.0 | 0.078 | 3.812 | 0.0083 | 503 | 1.32 | 3.89 | 1,122 |
| HP555 | High Solids MR (TEA) | 2.0 | 0.064 | 3.136 | 0.0083 | 37.7 | 0.98 | 3.20 | 199,561 |
| Purolite A530 | MR (Bifunctional amine) | 2.0 | 0.053 | 2.607 | 0.0083 | 32.3 | 0.78 | 2.66 | 268,432 |
| Example 11 | Low Solids Gel (TBA) | 2.0 | 0.045 | 2.205 | 0.0083 | 9.72 | 0.68 | 2.25 | 3,003,096 |
| Example 4 | Low Solids Gel (TBA) | 2.0 | 0.030 | 1.48 | 0.0083 | 6.7 | 0.68 | 1.51 | 6,313,986 |
| Example 1 | Low Solids Gel (TBA) | 2.0 | 0.037 | 1.803 | 0.0083 | 5.03 | 0.74 | 1.84 | 11,224,841 |
| Example 2 | Low Solids Gel (TBA) | 2.0 | 0.025 | 1.225 | 0.0083 | 4.69 | 0.59 | 1.25 | 12,885,654 |
| Example 3 | Low Solids Gel (TBA) | 2.0 | 0.025 | 1.205 | 0.0083 | 5.03 | 0.59 | 1.23 | 11,224,841 |
| Example 5 | Low Solids Gel (TBA) | 2.0 | 0.037 | 1.833 | 0.0083 | 3.70 | 0.78 | 1.87 | 20,872,605 |
| Example 13 | High Solids MR (TBA) | 2.0 | 0.049 | 2.401 | 0.0083 | 3.02 | 0.50 | 2.45 | 31,180,038 |
| Example 14 | High Solids MR (TBA) | 2.0 | 0.049 | 2.264 | 0.0083 | 2.3 | 0.51 | 2.31 | 51,542,471 |
| Example 7 | Low Solids Gel (TPA) | 5.0 | 0.074 | 1.406 | 0.0083 | 84.8 | 0.62 | 1.48 | 254,417 |
| Example 9 | Low Solids Gel (TBA) | 5.0 | 0.080 | 1.520 | 0.0083 | 37.2 | 0.60 | 1.60 | 1,321,649 |
| Example 10 | Low Solids Gel (TBA) | 5.0 | 0.091 | 1.729 | 0.0083 | 29.8 | 0.68 | 1.82 | 2,055,787 |
| Example 12 | High Solids MR (TBA) | 5.0 | 0.045 | 0.846 | 0.0083 | 7.70 | 0.30 | 0.89 | 30,781,581 |
| Dowex 1 | Gel (TMA) | 20.0 | 0.778 | 3.112 | 0.0083 | 7944.3 | 1.32 | 3.89 | 550 |
| Example 1 | Low Solids Gel (TBA) | 20.0 | 0.368 | 1.472 | 0.0083 | 75.7 | 0.74 | 1.84 | 6,004,600 |
| Example 13 | High Solids MR (TBA) | 20.0 | 0.490 | 1.960 | 0.0083 | 56.0 | 0.50 | 2.45 | 10,962,433 |

The selectivity data from Table 1 are directly comparable at the same perchlorate loading (R-$ClO_4$). The trends hold true at all perchlorate loading levels. The trend that selectivity goes down when perchlorate loading is increased is expected and shows that the resins made by the present invention are still highly selective at all ion concentrations. MR (macroreticular) resins reported in Example 12 and Example 13 have selectivity constants significantly better than any of the gel TBA (tributyl amine) resins reported. Without being bound by theory, this is likely due to the highly porous nature of the MR and the structural differences between the two copolymer matrices. In Example 7, a selectivity coefficient for a gel resin having tripropylamine functionality is lower than that for a gel resin having a tributylamine functionality. This is unexpected based on prior art (Brown, G.M.; Bonnesen, P.V.; Moyer, B.A.; Baohua, G.; Alexandratos, S.D.; Patel, V.; Ober, R. "The Design of Selective Resins for the Removal of Pertechnate and Perchlorate from Groundwater." In *Perchlorate in the Environment.,* E.T. Urbansky, Ed. Kluwer/Plenum: New York, NY, 2000, Ch.15.) which shows a tripropyl amine resin having higher selectivity for perchlorate than a tributylamine resin. This result is unexpected and teaches that control of the secondary crosslinking during the haloalkylation process may allow one to alter the selectivity of a resin for the perchlorate anion to a desired level. HP 555 resin is commercially available from Rohm & Haas Company.

The selectivity coefficient of the perchlorate removal resin can be modulated to obtain any desired selectivity. Not all combinations of techniques described herein will lead to a selectivity coefficient desired. However, one of ordinary skill in the art can easily determine the appropriate combination of techniques to obtain a desired coefficient using the teaching herein. In one variant of the invention, the selectivity coefficient for a desired resin can be achieved in the range of 300,000 to 1,000,000 plus. Amine functionality can be modulated. For example, a high solids MR resin with tripropyl amine functionality can be made; or a low solids gel with a triethyl functionality can be made. Moreover, the conditions of the tributylamine amination reaction by changing either the solvent system and/or the amine levels can also be modulated to obtain a desired selectivity. Going to a lower solids gel copolymer under the appropriate amination conditions will create a resin in a desired selectivity range.

Modulating selectivity of a percholorate removal resin has a number of commercial advantages. A resin with high perchlorate selectivity will result in an increasing number of pounds or kilograms loading of perchlorate on a cubic meter of perchlorate removal resin. This means that resins with a high selectivity (selectivity coefficient) load more pounds or kilograms percholorate on a cubic meter of resin than resins with a lower selectivity. The number of pounds or kilograms perchlorate removed per cubic meter of resin can be determined empirically. In another variant, the resin is capable of removing at least two times the amount of perchlorate per cubic meter of the resin versus conventional perchlorate removal resins such as the bifunctional quaternary alkylamine resin generally described in the art.

In another variant of the invention, one can use any anion resin in the polishing mode of the methods described herein, so long as the resin is modified to obtain the functionality described herein. In one variant, the resin is changed to increase perchlorate selectivity and loading for a given water source. In another variant of the invention, the water source is changed to increase the selectivity and loading for a given resin. In another variant of the invention, the lag or perchlorate selective bed, is not regenerated but is used in a disposable mode.

While only a few, preferred embodiments of the invention have been described hereinabove, those of ordinary skill in the art will recognize that the embodiment may be modified and altered without departing from the central spirit and scope of the invention. Thus, the preferred embodiment described hereinabove is to be considered in all respects as illustrative and not restrictive, the scope of the invention being indicated by the appended claims, rather than by the foregoing description, and all changes which come within the meaning and range of equivalency of the claims are intended to be embraced herein.

## Claims

1. An ion exchange resin composition capable of perchlorate removal having a selectivity constant of at least 300,000 based on a 2.0 equivalent percent loading of $ClO_4^-$ in a 400 ppm $SO_4^{2-}$ background.

2. The ion exchange resin composition of claim 1 in which said composition is capable under the same conditions as recited in claim 1 of removing at least two times the amount of perchlorate per cubic meter of said composition than a conventional perchlorate removal resin.

3. The ion exchange resin composition of claim 1 further comprising a quaternary alkylamine functionality.

4. The ion exchange resin of claim 2 in which said alkylamine functionality is selected from the group consisting of tributyl amine functionality, triethyl amine functionality, tripropyl amine functionality, tripentyl functionality, and trihexyl amine functionality.

**5.** A method of servicing a water treatment system comprising: loading into and/or unloading from said water treatment system a perchlorate removal resin having a selectivity constant of at least 300,000 based on a 2.0 equivalent percent loading Of $ClO_4^-$ in a 400 ppm $SO_4^{2-}$ background.

**6.** The method of claim 5 in which said resin has a selectivity constant in the range of 1,000,000-5,000,000.

**7.** The method of claim 5 in which said resin has a selectivity constant greater than 5,000,000.

**8.** The method of claim 5 in which said resin has quaternary alkylamine functionality.

**9.** The method of claim 5 in which said alkylamine is a tributyl amine.

**10.** A method of making water potable, comprising: loading a perchlorate removal resin having a selectivity constant of at least 300,000 based on a 2.0 equivalent percent loading of $ClO_4^-$ in a 400 ppm $SO_4^{2-}$ background into a water treatment system having perchlorate removal functionality, or nitrate removal functionality, or perchlorate and nitrate removal functionality; selectively removing said perchlorate, or nitrate, or a combination thereof from a water source with said perchlorate removal resin, a nitrate removal resin, or a combination thereof; and destroying and/or optionally disposing said perchlorate removal resin.

**11.** A method of destroying ground water contaminants, comprising incineration of an anionic contaminant removal resin having a selectivity constant of at least 300,000 based on a 2.0 equivalent percent loading of $ClO_4^-$ in a 400 ppm $SO_4^{2-}$ background, said anion removal resin having a perchlorate contaminant loaded thereon, and said anion removal resin optionally having loaded thereon and/or mixed therewith one or more other contaminants selected from the group consisting of an arsenate, an arsenite, a nitrate, and a chromate.

**12.** A method of destroying ground water contaminants, comprising using an anionic contaminant removal resin having a selectivity constant of at least 300,000 based on a 2.0 equivalent percent loading of $ClO_4^-$ in a 400 ppm $SO_4^{2-}$ background to remove at least one ground water contaminant, and disposing of or destroying said resin after loading it with one or more of said contaminants.